# EUROPEAN PATENT SPECIFICATION

(11) **EP 2 032 304 B1**
(45) Date of publication and mention of the grant of the patent: **31.08.2011**
(21) Application number: 07786811.5
(22) Date of filing: 22.06.2007
(51) Int. Cl.: B23K 26/26, B23K 37/04, B23K 26/08, B23K 101/18

(54) **METHOD OF AND DEVICE FOR BUTT WELDING WITHOUT WELD FILLER MATERIALS THIN METAL SHEETS USING CLAMPING PRESSING DEVICES, AT LEAST ONE PRESSING ELEMENT BEING SUITABLE FOR APPLYING TWO OR MORE DISTINCT PRESSURE LEVELS**
VERFAHREN UND VORRICHTUNG ZUR STUMPFSCHWEISSUNG DÜNNER METALLBAHNEN MITHILFE VON KLEMMDRUCKVORRICHTUNGEN UND OHNE SCHWEISSFÜLLMATERIALIEN, WOBEI MINDESTENS EIN DRUCKELEMENT ZUR AUSÜBUNG ZWEIER ODER MEHRERER VERSCHIEDENER DRUCKLEVEL GEEIGNET IST
PROCÉDÉ ET DISPOSITIF DE SOUDAGE BOUT À BOUT DE TÔLES MÉTALLIQUES MINCES SANS MATÉRIAU DE GARNITURE DE SOUDURE À L'AIDE DE DISPOSITIFS DE FIXATION ET DE PRESSAGE, AVEC AU MOINS UN ÉLEMENT DE PRESSAGE SUSCEPTIBLE D'APPLIQUER AU MOINS DEUX NIVEAUX DE PRESSION DIFFÉRENTS

(30) Priority: 23.06.2006 DE 102006029292
(43) Date of publication of application: 11.03.2009
(73) Proprietor: Uhdenora S.p.A, 20134 Milano (IT)
(72) Inventor: WOLTERING, Peter, 48485 Neuenkirchen (DE); DULLE, Karl-Heinz, 50399 Olfen (DE); KIEFER, Randolf, 45892 Gelsenkirchen (DE); OELMANN, Stefan, 58675 Hemer (DE); BÄUMER, Ulf-Steffen, 44263 Dortmund (DE); HOEDTKE, Joachim, 25436 Moorrege/Klevendeich (DE); KOBABE, Günther, 22457 Hamburg (DE)
(74) Representative: Reitstötter - Kinzebach
(86) International application number: PCT/EP2007/056279
(87) International publication number: WO 2007/147900

(56) References cited:
- EP-A1- 0 604 247
- DE-A1- 3 909 620
- JP-A- 5 208 285
- JP-A- 9 141 493
- JP-A- 2003 275 883
- JP-A- 2005 066 604
- US-A- 4 506 821

## Description

The invention is directed to a device for the linear butt welding of thin metal sheets without weld filler materials, provided with a carrier table and at least one clamping device arranged above and parallel to the carrier-table surface, under which one or more metal sheets can be positioned (see, for example, JP 9/141493). The clamping device is capable of exerting a pressure in the vertical direction on metal sheets introduced thereunder. The welding device according to the invention further comprises one or more movable welding heads, whereas the clamping device presents at least two pressing elements operating independently of one another, arranged in parallel and spaced-apart along the welding line and movable independently of one another, at least one of the pressing elements being suitable for applying two or more pressure levels, additional horizontal pressing elements being provided at least on the side of the carrier table wherein the pressing element suitable for applying multiple pressure levels is present, by means of which at least one of the metal sheets to be welded can be pressed in the direction of the welding line and against the other metal sheet simultaneously undergoing a deformation until a full-area contact of the metal-sheet edges butting against one another is achieved. The welding head is arranged such that it can be moved along the welding line, while a purging-gas duct runs below the carrier table and parallel to the welding line. Under another aspect, the invention is directed to a welding method making use of the welding device.

Welding methods without weld filler materials are disclosed in the prior art, wherein the adjoining semi-finished products are leak-proof connected to one another by means of the fusion of the abutting edges and subsequent consolidation, without any elaborate edge preparation. Since no weld filler material is used, not even one consisting of the same material as the semi-finished products, it is critical that the surfaces abutting against each other have a gapless contact. The result of voids or gaps would be that the fused material would not form any root in this region and hence flow out with no edge formation taking place. Customary methods are laser-welding or electron beam-welding. In the present specification, the term "welding method" hereafter shall be understood as referring only to methods making use of no weld filler material.

Several problems are associated with the welding of thin metal sheets, so that assembling larger metal sheets by welding a plurality of small metal sheets is normally avoided. The major problem consists of introducing an amount of heat too large to be dissipated quickly enough by the surrounding material. This leads to local distortions along the weld joint or even to deformations of the whole metal sheet. In case there are no raw metal sheets available in an appropriate size as one-piece material, they have to be assembled out of individual pieces to form the so-called tailored blanks. These individual metal sheets are normally cut off from continuous sheets of metal by means of a shearing cut. The cutting method by means of punching shears or the like gives rise, depending on the length of cut, to a cut edge horizontally arched by about 0.2 to 0.4 mm as described in DE 42 35 110 C1. A contraction of this kind is also to be observed on the longitudinal edges of rolled steel strips. As a rule therefore, before welding, it is necessary to pretreat the cut edge by means of a grinding or milling method if a very high-quality welded joint is to be produced.

JP 9/141493 describes a linear butt welding device, wherein only one level of pressure is applied during clamping of the metal shuts.

In DE 4235 110 C1, it is proposed to treat again these curved cut or outer edges of the raw metal sheet by means of a suitable cutting tool in order to ensure the required straightness at the edge. In DE 196 24 776 C1 it is disclosed that, in the case of linear joints, the required linearity is achieved by either cutting the metal sheets by means of precision shears, or by simultaneously trimming both of the metal-sheet edges to be welded by means of double-cut shears.

DE 39 09 620 A1 discloses a device and a method for the butt welding of mechanically cut metal-sheet edges. In this case, it is proposed to press the plates to be welded against one another and to close the possible residual gap by levelling off the existing burr into the gap. In this case, the presence of a considerable amount of burr is necessary, which should actually be avoided in a severing process. Furthermore, a burr is relatively indeterminate in terms of size and is therefore suitable only to a limited extent for a uniform gap closure.

The methods disclosed in the prior art require a complicated pretreatment step in order to allow a gapless joint closure. It is one aspect of the present invention to provide a welding device and a welding method overcoming the limitations of the prior art.

In DE 42 35 110 C1, it is disclosed that non-straight strip edges forced against one another into the welding position become wavy, that is raised and lowered in the vertical direction. However, it was surprisingly observed that these vertical distortions can be prevented if the raw metal sheets are tension-mounted along the welding edge and the two welding edges are pressed against one another before welding so as to level off the material unevenness and to restore linearity in the welding edge planes.

The object of the invention is achieved by means of a device for linear butt welding of thin metal sheets without weld filler materials, according to claim 1. The welding device comprises one or more movable welding heads, the clamping device being provided with:
- at least two pressing elements operating independently of one another, arranged in parallel and spaced-apart along the welding line and movable independently of one another, wherein at least one of the pressing elements is suitable for applying two or more distinct pressure levels,
- additional horizontal pressing elements at least on the side of the carrier table wherein the pressing element suitable for applying multiple distinct pressure levels is present, by means of which at least one of the metal sheets to be welded can be pressed in the direction of the welding line and against the other metal sheet while undergoing a deformation,
- means for moving the welding head along the welding line,
- a purging-gas duct running below the carrier table and parallel to the welding line.

The force to be applied by the horizontal pressing elements is so high that the opposite butting edges of the two metal sheets are ideally pushed towards one another into full-area contact. Voids or gaps possibly present, which result from unevenness or surface roughness of the butting edges, are in this case levelled off. The maximum permissible residual gap has a width of 0.05 mm.

In one embodiment of the welding device, the two edges of the clamping device running directly along the welding line form a weld channel having a trapezoidal cross-section above the carrier table. Preferably the walls forming the weld channel and the contiguous underside of the clamping device are made of a material of particularly high thermal conductivity and dimensional stability. Such material must additionally present a high resistance to the unintentional input of the laser beam. In another embodiment, the walls of the weld channel and/or the purging duct are cooled, for which purpose, in one or more walls, ducts for circulating a liquid or gaseous coolant are provided.

In another embodiment of the welding device, the welding head is movable along a rail or is guided by means of a robot arm. Owing to the lack of linearity and parallelism of the two welding edges pressed against one another and fixed vertically, the welding line thus formed under horizontal pressure is not centred in the weld channel, but deviates from an ideal centre line on both sides. The welding head is therefore preferably mounted in such a way that it can be moved parallel and transversely with respect to the weld channel. In one embodiment, the welding head is connected to a control unit, by means of which the welding head moves sequentially in straight segments along the welding line. Preferably the welding head is connected to a control and regulation device and follows the path of the welding line within the deviation limits determined by means of technical devices, for example an optical detection system focusing the welding line, the ideal position of the laser head being controllable during the welding operation by means of such data.

For an easier positioning of the metal sheets on the carrier table, the latter is provided, in one embodiment of the welding device, with a multiplicity of conveying elements, so that the at least one metal sheet can be easily moved in any desired direction on the horizontal plane. The conveying elements preferably consist of a layer of individual balls or compressed-air outlets, by means of which a pressure cushion allowing a very easy conveyance of the metal sheets can be established under the at least one metal sheet.

The welding heads to be used for the welding device are preferably laser welding equipment or electron-beam welding equipment which is positioned on an advancing element which allows a welding speed of at least 4.5 m/min, preferably of 9 m/min. The pressing elements are preferably driven by means of one or more hydraulic or pneumatic cylinders.

Under another aspect, the invention is directed to a method for the linear butt welding of thin metal sheets without weld filler materials, using the device according to one of the above disclosed embodiments and simultaneously or sequentially comprising the following steps:
a) positioning of a first metal sheet on the carrier table, the welding edge lying centrally and in parallel above the purging duct within the tolerances,
b) vertical fixing of the first metal sheet on the carrier table by means of the first pressing element,
c) positioning of a second metal sheet on the carrier table, the welding edge lying above the purging duct and butting against the welding edge of the first metal sheet,
d) vertical prefixing of the second metal sheet on the carrier table by means of the second pressing element under a low pressure,
e) horizontal pressing of the second metal sheet against the first metal sheet by means of the at least one horizontal pressing element,
f) vertical fixing of the second metal sheet on the carrier table by means of the second pressing element,
g) complete or partial purging of the purging duct with protective gas,
h) laser welding with the simultaneous movement of the welding head under a protective-gas atmosphere,
i) opening of the clamping device and extraction of the metal sheet,
j) return to step a).

In step e), in which the horizontal pressing of the second metal sheet against the previously fixed first metal sheet is carried out, the applied compressive force is so high that the metal-sheet edge is deformed, resulting in a full-area gapless closure of the two adjoining metal-sheet edges.

Surprisingly, it was observed that, provided a sufficient horizontal compressive force is applied in the area near the butting edge, the relaxation in the fusion phase is sufficient to relieve the stresses along this edge. It was likewise possible to observe that the horizontal material compression along the butt-weld joint leads to an improved joint geometry. The fraction of evaporated material associated with any welding method without weld filler materials was again partially compensated by the expansion of the metal sheet in the direction of the fused joint.

In one embodiment, steps a) to j) are carried out sequentially in the indicated order; in different embodiments, steps a) and c) may be executed in reverse order or simultaneously with steps b) and d) following accordingly. Likewise, the first metal sheet may also be prefixed to the carrier table in step b), and in step f) both metal sheets may be fixed on the carrier table, the fixing of the two metal sheets preferably taking place simultaneously.

The vertical fixing of the metal sheet is in this case dependent on the horizontal forces and on the selected roughness of the pressing elements and of the base. The pressing force to be selected for the vertical prefixing of the metal sheets is likewise dependent on the surface of the pressing elements and of the base. It is essential that the possibility for horizontal movement of the metal sheet in the direction of the butting edge is not prevented completely. The horizontal fixing in step e) and the force required for achieving full-area contact of the two welding edges, along with controlled material deformation and material compression along the butting edge, are essentially dependent on the material and the thickness of the metal sheet and on the degree of non-linearity of the welding edges.

In the welding tests, a CO₂ laser with a power of 6 kW, a wavelength of 10.6 µm and a welding speed of 9 m/min was used. The metal-sheet materials used were nickel and titanium sheets. The edges of the titanium sheet to be welded had a length of 1358 mm. The weld channel had a width of 3 mm at the bottom.

In the tests, the transverse deviation of the weld joint was determined at individual measurement points and the CO₂ laser was controlled such that it was moved from measurement point to measurement point in segments along the welding line. The samples produced fulfilled all technical specifications and it was not possible to detect any waviness along the weld joint.

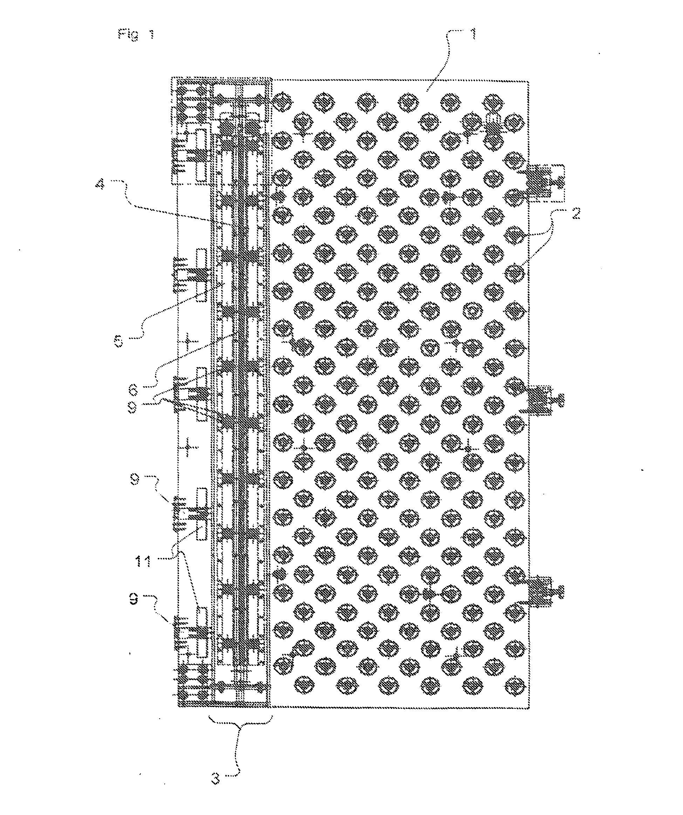

Fig. 1 to Fig. 2 show exemplary embodiments of the welding device. Fig. 1 is a top-view of the device. The carrier table **1** is shown without a metal sheet to be machined. A multiplicity of conveying elements **2** are shown in form of individual rollers, according to one embodiment. The clamping device **3,** which is not suitable for being moved in the horizontal direction, extends over the entire width of the carrier table **1.** The clamping device **3** comprises the two parallel pressing elements **4** and **5** for the vertical positioning and fixing of metal sheets.

The region between the two pressing elements **4** and **5** forms the weld channel **6.** The clamping device **3** essentially divides the carrier table **1** into two parts. On the narrower part of the carrier table **1,** along the carrier-table edge parallel to the weld channel **6,** a multiplicity of horizontal pressing elements **11** are arranged, whereby a metal sheet introduced therein can be pushed in the direction of the weld channel **6** and against the other metal sheet, not shown, fixed thereto. The horizontal pressing elements **11** are driven by pneumatic cylinders **9.**

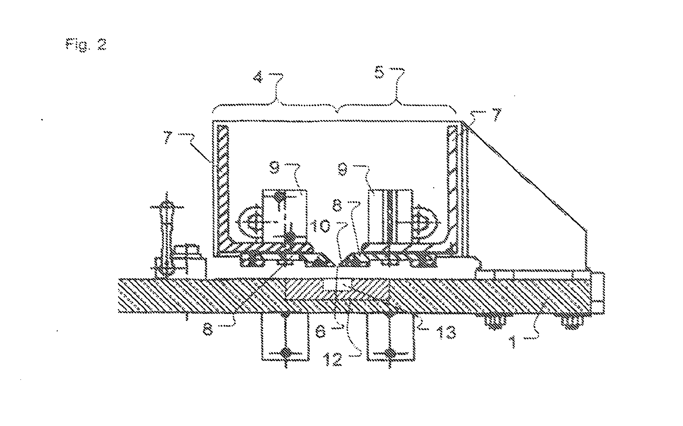

Fig. 2 is a vertical section showing the details of the pressing elements **4** and **5** and of the weld channel **6.** The pressing elements **4** and **5** comprise a beam-like, L shaped carrier **7** below which a horizontal fixing shoe **8** is arranged. Such fixing shoe **8** is raised or lowered by means of a multiplicity of pneumatic cylinders **9** arranged on the top side of the horizontal leg of the L shaped carrier **7.**

The pneumatic cylinders **9** drive the two fixing shoes **8** independently of one another. The fixing shoes **8** are provided with a sole **10** along the weld channel **6** made of a metal alloy for optimal heat dissipation and dimensional stability. The facing front edges of the fixing shoes **8** and of the soles **10** are shaped so as to present a trapezoidal cross-section above the carrier table **1.** In a weld channel **6** formed in this way, the protective gas flowing in is compressed in the direction of the duct bottom, and an excess of protective gas is always maintained.

At the bottom of the weld channel **6** and parallel thereto, the carrier table **1** has a strip **12** arranged therein provided with a groove **13** acting as purging duct for a protective-gas flow at the weld root. During operation it is provided that the metal sheets to be welded close the purging duct **13,** so that only a relatively low volumetric flow of protective gas is required for an optimal protective-gas atmosphere.

Throughout the description and the claims of this specification the word "comprise" and variations of the word, such as "comprising" and "comprises" are not intended to exclude other additives, components, integers or steps.

The discussion of documents, acts, materials, devices, articles and the like is included in this specification solely for the purpose of providing a context for the present invention.

## Claims

1. Device for the linear butt welding of thin metal sheets without weld filler materials, provided with a carrier table (1) and at least one clamping device (3) arranged above and parallel to the carrier-table (1) surface suitable for positioning one or more metal sheets, the clamping device (3) being capable of exerting pressure in the vertical direction on a metal sheer introduced thereunder, comprising
- at least one welding head movable along the welding line,
- at least two pressing elements (4,5) operating independently of one another, arranged in parallel and spaced-apart along the welding line and movable independently of one another, at least one of said at least two pressing elements (4,5) being suitable for applying two or more distinct pressure levels,
- means for operating at least one of said at least two pressing elements (4,5) at two or more distinct pressure levels,
- additional horizontal pressing elements (11) arranged at least on the side of the carrier table (1) of said at least one pressing element (11) suitable for applying multiple distinct pressure level, by means of which at least one of the metal sheets to be welded can be pressed in the direction of the welding line and against the other metal sheet while undergoing a deformation.

2. Welding device according to claim 1 further comprising a purging-gas duct (13) running below the carrier table (1) and parallel to the welding line.

3. Welding device according to claim 1 or 2, wherein said at least two pressing elements (4,5) are provided with soles (10) for fixing or pre-fixing the metal sheets, wherein the edges of said pressing elements (4,5) running along the welding line and said soles (10) form a weld channel (6) above the carrier table (1) having a trapezoidal cross-section.

4. Welding device according to claim 3 wherein said trapezoidal cross section narrows in the vertical direction towards the carrier table (1).

5. Welding device according to claim 3 or 4 wherein the walls of said weld channel (6) and the contiguous underside of the at least one clamping device (4,5) are made of a material of high thermal conductivity and dimensional stability.

6. Welding device according to any one of claims 2 to 5, wherein the walls of said purging gas duct (13) are made of a material of high thermal conductivity and dimensional stability.

7. Welding device according to any one of the preceding claims wherein said at least one welding head is movable along a rail or is guided by a robot arm.

8. Welding device according to any one of the preceding claims wherein the carrier table (1) is further provided with a multiplicity of conveying elements (2) allowing the movement of the metal sheets in any direction on the horizontal plane.

9. Welding device according to claim 8 wherein said conveying elements (2) consist of a layer of individual balls or rollers or compressed-air outlets.

10. Welding device according to any one of the preceding claims wherein at least one of said pressing elements (4,5) is driven by at least one hydraulic or pneumatic cylinder.

11. Welding device according to any one of the preceding claims wherein said at least one welding head is a laser-welding or electron-beam welding equipment.

12. Welding device according to any one of the preceding claims wherein said at least one welding head is connected to at least one means for moving it parallel and transversely with respect to the weld channel.

13. Welding device according to claim 12 wherein said means for moving said welding device is a drive element connected to a control and regulation device.

14. Welding device according to claim 13 wherein said control and regulation device is connected to an optical sensor for determining the position of the welding line.

15. Method for the linear butt welding of thin metal sheets comprising sequentially or simultaneously executing the following steps by using the welding device according to any one of claims 2 to 14:
a) positioning of a first metal sheet on the carrier table (1), the welding edge lying centrally and in parallel above said purging duct (13),
b) vertical fixing of the first metal sheet on the carrier table (1) by means of the first of said at least two pressing elements (4,5),
c) positioning of a second metal sheet on the carrier table (1), the welding edge lying above said purging duct (13) and butting against the welding edge of said first metal sheet,
d) vertical pre-fixing of the second metal sheet on the carrier table (1) by means of the second of said at least two pressing elements (4,5) under a low pressure,
e) horizontal pressing of said second metal sheet against said first metal sheet by means of said at least one horizontal pressing element (4,5),
f) vertical fixing of said second metal sheet on the carrier table by means of the second of said at least two pressing elements (4,5),
g) complete or partial purging of said purging duct (13) with protective gas,
h) welding while moving said at least one welding head under a protective-gas atmosphere,
i) opening of the clamping device and extraction of the resulting metal sheet,
j) optional return to step a).

16. Method according to claim 15 wherein said steps are executed sequentially as listed.

17. Method according to claim 15 wherein steps a) and c) are executed in reverse order than listed or simultaneously with steps b) and d) following accordingly.

18. Method according to any one of claims 15 to 17 wherein both of said metal sheets are fixed on the carrier table (1) in step f).

19. Method according to claim 18 wherein said fixing of both metal sheets on the carrier table (1) is performed simultaneously.

20. Method according to any one of claims 15 to 19 wherein said horizontal pressing in step e) leaves a maximum residual gap of 0.05 mm between said first and second metal sheet.

21. Method according to any one of claims 15 to 20 wherein after step g) the transverse deviation of the actual welding line from the ideal line is determined as discrete values, subsequently sequentially moving said welding head in straight segments along the welding line by means of a control unit.

22. Method according to claim 21 wherein said actual welding line is detected by means of an optical sensor, such data being transferred to a control unit adjusting the movement of said welding head.

## Patentansprüche

1. Vorrichtung zum stumpfen Linienschweißen dünner Bleche ohne Schweißzusatzwerkstoffe, aufweisend einen Trägertisch (1), wenigstens einer Spannvorrichtungen (3), die oberhalb und parallel zur Oberfläche des Trägertischs (1) angeordnet sind und unter welchen ein oder mehrere Bleche positionierbar sind, wobei die Spannvorrichtung (3) in vertikaler Richtung Druck auf ein darunter eingelegtes Blech ausüben kann, umfassend
- wenigstens einen entlang der Schweißlinie verfahrbaren Schweißkopf,
- mindestens zwei unabhängig voneinander arbeitende Anpresselemente (4, 5), welche sich parallel und mit einem Abstand entlang der Schweißlinie gegenüber liegen und unabhängig voneinander bewegt werden können, wobei mindestens eines der Anpresselemente (4, 5) geeignet ist, zwei oder mehr Druckstufen zu erreichen,
- Mittel zum Betreiben wenigstens eines der Anpresselemente (4, 5) in zwei oder mehr Druckstufen,
- mindestens auf dieser Seite des Trägertisches (1), auf welcher das Anpresselement mit den mehrfachen Druckstufen liegt, weiterhin horizontale Anpresselemente (11) angeordnet sind, mittels welcher mindestens eines der zu verschweißenden Bleche in Richtung der Schweißlinie und unter Deformation gegen das andere Blech gepresst werden kann.

2. Schweißvorrichtung nach Anspruch 1, des Weiteren umfassend einen unterhalb des Trägertisches (1) und parallel zur Schweißlinie verlaufenden Spülgaskanal (13).

3. Schweißvorrichtung gemäß Anspruch 1 oder 2, wobei die wenigstens zwei Anpresselemente (4, 5) Spannsohlen (10) aufweisen, mittels welcher das oder die Bleche fixiert oder vorfixiert werden können, wobei die an der Schweißlinie entlanglaufenden Kanten der Anpresselemente (4, 5) und die Spannsohlen (10) oberhalb des Trägertisches (1) einen Schweißkanal (6) bilden, der einen trapezförmigen Querschnitt. hat,

4. Schweißvorrichtung gemäß Anspruch 3, wobei sich der trapezförmige Querschnitt in vertikaler Richtung zum Trägertisch (1) verengt.

5. Schweißvorrichtung gemäß einem der Ansprüche 3 oder 4, wobei die den Schweißkanal (6) bildende Wand und die angrenzende Unterseite der wenigstens einen Spannvorrichtung (4,5) aus einem Werkstoff gebildet ist, der eine hohe Wärmeleitfähigkeit bei gleichzeitiger Formstabilität aufweist.

6. Schweißvorrichtung gemäß einem der Ansprüche 2 bis 5, wobei die Wände des Spülgaskanals (13) aus einem Werkstoff gebildet sind, der eine hohe Wärmeleitfähigkeit bei gleichzeitiger Formstabilität aufweist.

7. Schweißvorrichtung gemäß einem der vorangegangenen Ansprüche, wobei der wenigstens eine Schweißkopf entlang einer Schiene verfahren oder von einem Einarmroboter geführt wird.

8. Schweißvorrichtung gemäß einem der vorangegangenen Ansprüche, wobei der Trägertisch (1) des Weiteren mit einer Vielzahl von Förderelementen (2) ausgestattet ist, auf welchen das oder die Bleche in jeder beliebigen horizontalen Richtung bewegbar sind.

9. Schweißvorrichtung gemäß Anspruch 8, wobei die Förderelemente (2) aus einer Schicht von einzelnen Bällen oder Rollen oder Druckluftauslässen bestehen.

10. Schweißvorrichtung gemäß einem der vorangegangenen Ansprüche, wobei wenigstens einer der Anpresselemente (4, 5) mit wenigstens einem hydraulischen oder pneumatischen Zylinder angetrieben wird.

11. Schweißvorrichtung gemäß einem der vorangegangenen Ansprüche, wobei der wenigstens eine Schweißkopf ein Laserschweißgerät oder ein Elektronenstrahlschweißgerät ist.

12. Schweißvorrichtung gemäß einem der vorangegangenen Ansprüche, wobei der wenigstens eine Schweißkopf mit wenigstens einem Antriebsmittel verbunden ist, womit dieser parallel und quer zum Schweißkanal bewegbar ist.

13. Schweißvorrichtung gemäß Anspruch 12, wobei das Antriebsmittel zum Bewegen des Schweißeinrichtung ein mit einer Steuer- und Regeleinrichtung verbundenes Antriebselement ist.

14. Schweißvorrichtung gemäß Anspruch 13, wobei die Steuer- und Regeleinrichtung mit einem optischen Sensor zur Lagebestimmung der Schweißlinie verbunden ist.

15. Verfahren zum stumpfen Linienschweißen dünner Bleche, bei dem eine Vorrichtung nach einem der Ansprüche 2 bis 14 verwendet wird und die folgenden Schritte nacheinander oder gleichzeitig durchgeführt werden:
a) Positionierung eines erstes Blechs auf dem Trägertisch (1), wobei die Schweißkante innerhalb der Toleranzen mittig und parallel über dem Spülkanal (13) liegt,
b) vertikale Fixierung des ersten Blechs auf dem Trägertisch (1) mittels des ersten der wenigstens zwei Anpresselemente,
c) Positionierung eines zweiten Blechs auf dem Trägertisch (1), wobei die Schweißkante über dem Spülkanal (13) liegt und an die Schweißkante des ersten Blechs stößt,
d) vertikale Vorfixierung des zweiten Blechs auf dem Trägertisch (1) mittels des zweiten der wenigstens zwei Anpresselemente bei einem geringen Druck,
e) horizontale Anpressung des zweiten Blechs an das erste Blech mittels des wenigstens einen horizontalen Anpresselements (4, 5),
f) vertikale Fixierung des zweiten Blechs auf dem Trägertisch mittels des zweiten der wenigstens zwei Anpresselemente (4, 5),
g) komplettes oder abschnittsweises Spülen des Spülkanals (13) mit Schutzgas,
h) Schweißen bei gleichzeitigem Verfahren des wenigstens einen Schweißkopfes unter Schutzgasatmosphäre,
i) Öffnen der Fixiervorrichtung und Entnahme des so erhaltenen Blechs.
j) optionales Zurückkehren zu Schritt a)

16. Verfahren gemäß Anspruch 15, wobei die Schritte gemäß Auflistung nacheinander ausgeführt werden.

17. Verfahren gemäß Anspruch 15, wobei die Schritte a) und c) in umgekehrter Reihenfolge oder zeitgleich vollzogen werden, und die Schritte b) und d) in analoger Weise folgen.

18. Verfahren gemäß einem der Ansprüche 15 bis 17, wobei in Schritt f) beide Bleche auf dem Trägertisch (1) fixiert werden.

19. Verfahren gemäß Anspruch 18, wobei die Fixierung der beiden Bleche auf dem Trägertisch (1) gleichzeitig erfolgt.

20. Verfahren gemäß einem der Ansprüche 15 bis 19, wobei in Schritt e) die horizontale Anpressung maximal 0,05 mm Restspalt zwischen dem ersten und zweiten Blech hinterlässt.

21. Verfahren gemäß einem der Ansprüche 15 bis 20, wobei nach Schritt g) die Querabweichung der Schweißlinie von der Ideallinie als diskrete Werte ermittelt werden und nachfolgend der Schweißkopf mittels eines Steuergeräts sequentiell in geraden Teilstücken die Schweißlinie abfährt.

22. Verfahren gemäß Anspruch 21, wobei die tatsächliche Schweißlinie mittels eines optischen Sensors erfasst und diese Daten an ein Steuergerät weitergeleitet werden, das die Bewegung des Schweißkopfes regelt.

## Revendications

1. Dispositif pour le soudage linéaire bout à bout de tôles métalliques minces, sans matière d'apport de soudure, pourvu d'une table de support (1) et d'au moins un dispositif de serrage (3) disposé au-dessus de la surface de la table de support (1) et parallèlement à celle-ci, laquelle surface est appropriée pour le positionnement d'une ou plusieurs tôles métalliques, le dispositif de serrage (3) étant capable d'exercer une pression dans la direction verticale sur une tôle métallique introduite sous lui, comprenant :
- au moins une tête de soudage déplaçable le long de la ligne de soudage,
- au moins deux éléments de pressage (4, 5) fonctionnant indépendamment l'un de l'autre, disposés parallèlement l'un par rapport à l'autre et espacés l'un de l'autre le long de la ligne de soudage, et pouvant être déplacés indépendamment l'un de l'autre, au moins l'un desdits au moins deux éléments de pressage (4, 5) étant approprié pour appliquer deux niveaux de pression distincts ou plus,
- un moyen pour actionner au moins l'un desdits au moins deux éléments de pressage (4, 5) à deux niveaux de pression distincts ou plus,
- des éléments de pressage horizontaux additionnels (11) disposés au moins sur le côté de la table de support (1) sur lequel se trouve ledit au moins un élément de pressage (11) approprié pour appliquer plusieurs niveaux de pression distincts, au moyen desquels au moins l'une des tôles métalliques à souder peut être pressée dans la direction de la ligne de soudage, contre l'autre tôle métallique, tout en subissant une déformation.

2. Dispositif de soudage selon la revendication 1, comprenant en outre une conduite de gaz de purge (13) s'étendant en-dessous de la table de support (1) et parallèlement à la ligne de soudage.

3. Dispositif de soudage selon la revendication 1 ou 2, dans lequel lesdits au moins deux éléments de pressage (4, 5) sont pourvus de semelles (10) pour la fixation ou la préfixation des tôles métalliques, où les bords desdits éléments de pressage (4, 5) s'étendant le long de la ligne de soudage et lesdites semelles (10) forment, au-dessus de la table de support (1), un canal de soudage (6) ayant une section transversale trapézoïdale.

4. Dispositif de soudage selon la revendication 3, dans lequel ladite section transversale trapézoïdale se rétrécit dans la direction verticale en direction de la table de support (1).

5. Dispositif de soudage selon la revendication 3 ou 4, dans lequel les parois dudit canal de soudage (6) et la face de dessous contiguë de l'au moins un dispositif de serrage (4, 5) sont formés d'un matériau à haute conductivité thermique et à grande stabilité dimensionnelle.

6. Dispositif de soudage selon l'une quelconque des revendications 2 à 5, dans lequel les parois de ladite conduite de gaz de purge (13) sont formées d'un matériau à haute conductivité thermique et à grande stabilité dimensionnelle.

7. Dispositif de soudage selon l'une quelconque des revendications précédentes, dans lequel ladite au moins une tête de soudage est déplaçable le long d'un rail et est guidée par un bras robot.

8. Dispositif de soudage selon l'une quelconque des revendications précédentes, dans lequel la table de support (1) est en outre pourvue d'une multiplicité d'éléments de transport (2) permettant le déplacement des tôles métalliques dans n'importe quelle direction dans le plan horizontal.

9. Dispositif de soudage selon la revendication 8, dans lequel lesdits éléments de transport (2) sont constitués d'une couche de billes individuelles ou de galets ou d'orifices de sortie d'air comprimé.

10. Dispositif de soudage selon l'une quelconque des revendications précédentes, dans lequel au moins l'un desdits éléments de pressage (4, 5) est entraîné par au moins un vérin hydraulique ou pneumatique.

11. Dispositif de soudage selon l'une quelconque des revendications précédentes, dans lequel ladite au moins une tête de soudage est un équipement de soudage par laser ou de soudage par faisceau électronique.

12. Dispositif de soudage selon l'une quelconque des revendications précédentes, dans lequel ladite au moins une tête de soudage est connectée à au moins un moyen pour la déplacer parallèlement et transversalement au canal de soudage.

13. Dispositif de soudage selon la revendication 12, dans lequel ledit moyen pour déplacer ledit dispositif de soudage est un élément d'entraînement connecté à un dispositif de commande et de régulation.

14. Dispositif de soudage selon la revendication 13, dans lequel ledit dispositif de commande et de régulation peut être connecté à un capteur optique pour déterminer la position de la ligne de soudage.

15. Procédé pour le soudage linéaire bout à bout de tôles métalliques minces, comprenant l'exécution séquentielle ou simultanée, à l'aide du dispositif de soudage selon l'une quelconque des revendications 2 à 14, des étapes suivantes :
a) positionnement d'une première tôle métallique sur la table de support (1), le bord de soudage se trouvant à une position centrale au-dessus de ladite conduite de purge (13) et parallèlement à celle-ci,
b) fixation verticale de la première tôle métallique sur la table de support (1) au moyen du premier desdits au moins deux éléments de pressage (4, 5) ;
c) positionnement d'une deuxième tôle métallique sur la table de support (1), le bord de soudage se trouvant au-dessus de ladite conduite de purge (13) et venant en butée contre le bord de soudage de ladite première tôle métallique,
d) préfixation verticale de la deuxième tôle métallique sur la table de support (1) au moyen du deuxième desdits au moins deux éléments de pressage (4, 5) sous une faible pression,
e) pressage horizontal de ladite deuxième tôle métallique contre ladite première tôle métallique au moyen dudit au moins un élément de pressage horizontal (4, 5),
f) fixation verticale de ladite deuxième tôle métallique sur la table de support au moyen du deuxième desdits au moins deux éléments de pressage (4, 5),
g) purge complète ou partielle de ladite conduite de purge (13), à l'aide d'un gaz protecteur,
h) soudage avec déplacement simultané de ladite au moins une tête de soudage, sous une atmosphère de gaz protecteur,
i) ouverture du dispositif de serrage et extraction de la tôle métallique obtenue,
j) retour éventuel à l'étape a).

16. Procédé selon la revendication 15, dans lequel lesdites étapes sont exécutées de manière séquentielle selon la liste.

17. Procédé selon la revendication 15, dans lequel les étapes a) et c) sont exécutées dans l'ordre inverse par rapport à la liste ou simultanément, les étapes b) et d) suivant en conséquence.

18. Procédé selon l'une quelconque des revendications 15 à 17, dans lequel lesdites deux tôles métalliques sont fixées sur la table de support (1) à l'étape (f).

19. Procédé selon la revendication 18, dans lequel lesdites opérations de fixation des deux tôles métalliques sur la table de support (1) sont effectuées simultanément.

20. Procédé selon l'une quelconque des revendications 15 à 19, dans lequel ledit pressage horizontal de l'étape e) laisse un écart résiduel maximal de 0,05 mm entre lesdites première et deuxième tôles métalliques.

21. Procédé selon l'une quelconque des revendications 15 à 20, dans lequel, après l'étape g), la déviation transversale de la ligne de soudage réelle par rapport à la ligne idéale est déterminée sous la forme de valeurs discrètes, puis ladite tête de soudage est déplacée de manière séquentielle selon des segments rectilignes le long de la ligne de soudage, au moyen d'une unité de commande.

22. Procédé selon la revendication 21, dans lequel ladite ligne de soudage réelle est détectée au moyen d'un capteur optique, ces données étant transférées à une unité de commande ajustant le déplacement de ladite tête de soudage.
